# EUROPEAN PATENT APPLICATION

(11) **EP 4 597 771 A1**
(43) Date of publication of application: **06.08.2025**
(21) Application number: 22959715.8
(22) Date of filing: 28.09.2022
(51) Int. Cl.: H02G 15/08, H02G 15/013, H02G 15/18, H01R 4/70, H01R 11/11, H01B 7/282

(54) **ANTI-CONDENSATION INSULATION BLOCKS USED ON THE ELECTRIC CABLE OF LIGHTING FIXTURES**

(71) Applicant: Stella Importação e Exportação de Luminárias Ltda, Sapiranga (BR)
(72) Inventor: BERLITZ, Lisandro Henrique, 93800-094 Sapiranga (BR)
(74) Representative: do Nascimento Gomes, Rui
(86) International application number: PCT/BR2022/050380
(87) International publication number: WO 2024/065015

(57) **Abstract**

The anti-condensation insulation block applied to an electrical cable of light fixtures, which is the object of the present invention, comprises a mechanical insulation system through an insulation block (10) connected to the electrical cable (100), the purpose of which is to prevent the passage of water into the light fixture via capillary effect in the cable. This insulation block (10) is composed of a flat plate (20) to which the conductors (101) are welded separately, electrically joined only by the copper track of the flat plate (20). The flat plate (20) is covered by high-pressure injected rubber, so as to fill all the gaps inside the block, making it immune to water infiltration.

## Description

### FIELD OF THE INVENTION

The present invention relates to an anti-condensation insulation block applied to an electrical cable of light fixtures. More specifically, it comprises a mechanical insulation system aiming to prevent the passage of water into the light fixtures via capillary effect in the cable.

This block consists of a flat plate to which the conductors are welded separately, electrically joined only by the copper track on the plate. The plate is covered with high-pressure injected rubber in order to fill all the gaps inside the block, making it immune to water infiltration.

### BACKGROUND OF THE INVENTION

Currently on the market, several models of light fixtures sold for use in outdoor areas are manufactured only with the power cord connected directly generating several inconveniences because in flooding situations, the capillary effect in the cable will lead the water inside the product, causing irreparable damage to the electronic assembly of the light fixtures.

Thus, the present inventor, seeking to solve these market inconveniences, has developed a mechanical insulation system that protects the product against water penetration due to the capillary effect of the cable, preventing water from entering its electronic circuit and causing severe damage.

In search conducted on the prior art, we identified several documents describing cables with an insulation system, of which we can highlight the following documents:
CN210007364 (Shijiazhuang. 2019) describes a waterblocking intermediate connector for cable connection wherein the connector comprises a connector body and an inner support sleeve.
WO2019171724 (Autonetworks. 2018) describes a water intrusion prevention structure for a splice portion wherein core wires of a plurality of electrical cables are connected to each other.
CN204189979 (Chongqing. 2014) describes a waterblocking cable joint comprising a connector and two cable cores, each cable core comprising a multilayer conductor that is integrally shaped and a single conductor.
CN104078915 (Ltk Cable. 2014) describes a cable intermediate connector used to connect two cables and a medium connector comprising two ends, a pressure connecting tube, a conductive protective tube, and an insulating medium head.

These documents cited in the prior art describe cables with an insulation system to prevent water from entering light fixtures and similar devices, but they describe complex construction manners that do not have good efficiency due to the sealing method and internal connections.

Thus, the object of the present invention is an anti-condensation insulation block applied to an electrical cable of light fixtures comprising a mechanical insulation system composed of a flat plate to which the conductors are separately welded, electrically joined only by the copper track of the plate. The plate is covered with high-pressure injected rubber so as to fill all the gaps inside the block, making it immune to water infiltration, thus ensuring greater efficiency and greater manufacturing practicality.

### SUMMARY OF THE INVENTION

The present invention features an anti-condensation insulation block applied to an electrical cable of light fixtures providing an insulation block injected onto an internal flat plate.

The present invention features an anti-condensation insulation block applied to an electrical cable of light fixtures providing a flat plate that receives the fixing of the wire conductors along the copper tracks.

The present invention features an anti-condensation insulation block applied to an electrical cable of light fixtures providing a flat plate that receives the application of a resin before receiving the rubber block.

The present invention features an anti-condensation insulation block applied to an electrical cable of light fixtures providing a block equipped with an internal flat plate with resin that makes the system immune to water infiltration.

### BRIEF DESCRIPTION OF THE FIGURES

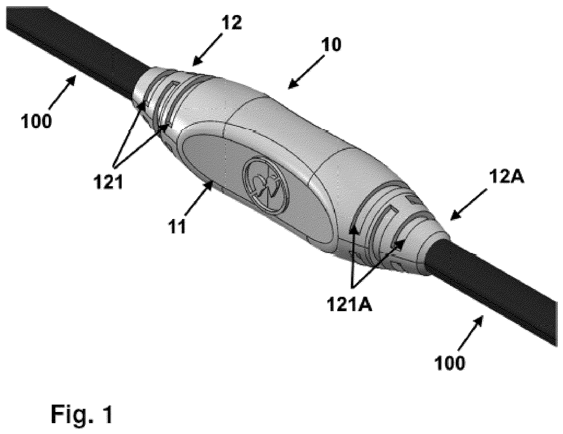

Figure 1 shows the perspective view of the anti-condensation insulation block.

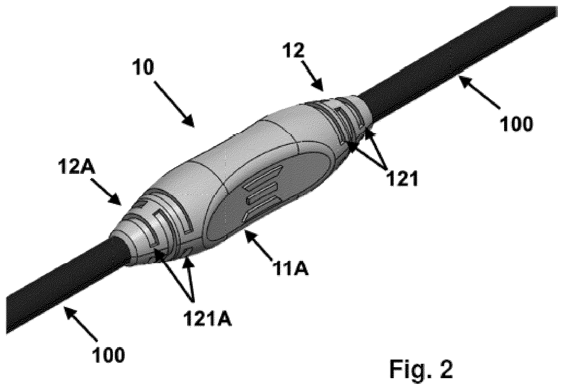

Figure 2 shows the rear perspective view of the anti-condensation insulation block.

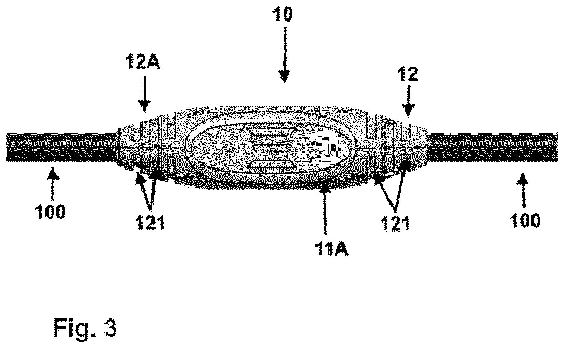

Figure 3 shows the rear view of the anti-condensation insulation block.

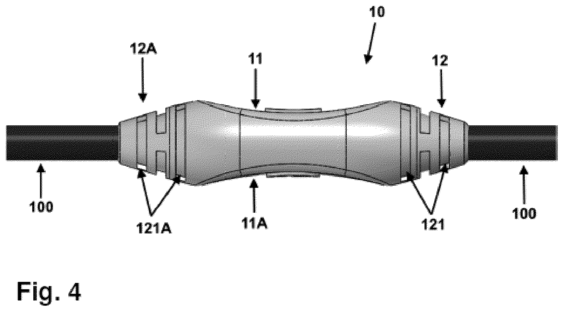

Figure 4 shows the top view of the anti-condensation insulation block.

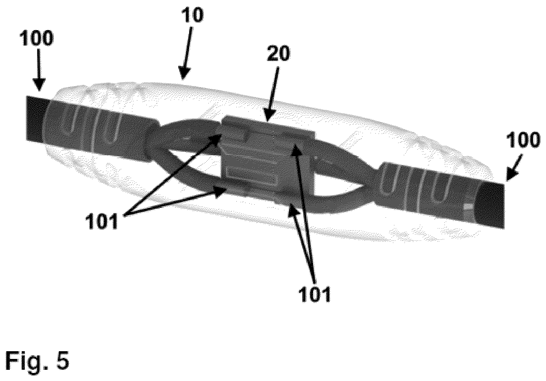

Figure 5 shows the fading perspective view of the anti-condensation insulation block, detailing the internal layout of the plate.
Figures 6 and 6A show the front and rear perspective views of the plate connected to the cable and conductors.

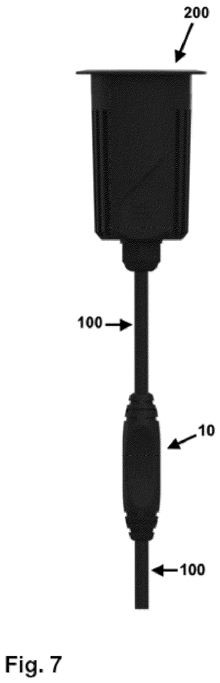

Figure 7 shows the rear view of the anti-condensation insulation block installed next to the luminaire cable.

### DETAILED DESCRIPTION OF THE INVENTION

The anti-condensation insulation block applied to an electrical cable of light fixtures, which is the object of the present invention, comprises an insulation block (10) connected to an electrical cable (100) aiming to prevent water from running through the interior of the cable due to the capillary effect.

The block (10) is composed of a flat plate (20) on which the conductors (101) of the cable (100) are welded separately, being electrically joined only by the copper track of the plate (20), so that the conductors (101) are not touching each other only through the plate (20).

The block (10) is formed by means of high-pressure injected rubber onto the plate (20) assembled with the conductors (101) of the cable (100) in order to fill all the gaps inside the block (10), making it immune to water infiltration.

The block (10) has a slight concavity (11) (11A) on its front and rear faces and a reduced diameter (12) (12A) on the side faces for fixing to the cable (100), said reduced diameter having a set of grooves (121) (121A).

The plate (20) allows the fixing of the conductors (101) of the cable (100) in the front and rear portion next to grooves (21), said plate (20) which, after fixing the conductors, receives a resin that aims to prevent water from passing into the product.

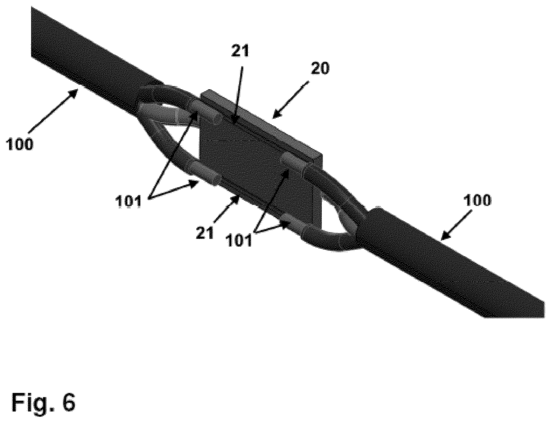

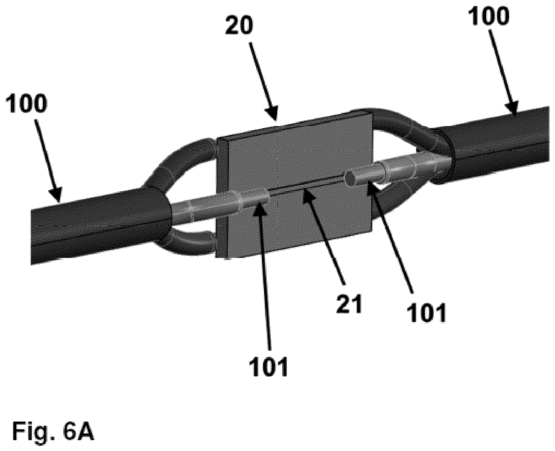

Figure 6 shows the application of the block (10) next to the cable (100) of the light fixture (200), representing the mechanical insulation system that prevents the passage of water into the light fixture via capillary effect in the cable (100).

## Claims

1. An anti-condensation insulation block applied to an electrical cable of light fixtures comprising an insulation block (10) connected to an electrical cable (100), **characterized in that** the insulation block (10) is formed by high-pressure injected rubber onto a flat plate (20) on which conductors (101) of the electrical cable (100) are welded separately, being electrically joined only by a copper track of the flat plate (20), so that the conductors (101) are not touching each other only through the flat plate (20).

2. The anti-condensation insulation block applied to the electric cable of light fixtures, according to claim 1, **characterized in that** the insulation block (10) has a slight concavity (11) (11A) on its front and rear face.

3. The anti-condensation insulation block applied to the electric cable of light fixtures, according to claim 1, **characterized in that** the insulation block (10) has on the side faces a reduction in diameter (12) (12A) provided with a set of grooves (121) (121A).

4. The anti-condensation insulation block applied to the electric cable of light fixtures, according to claim 1, **characterized in that** the flat plate (20) allows the fixing of the conductors (101) of the electrical cable (100) in the front and rear portion next to grooves (21).

5. The anti-condensation insulation block applied to the electric cable of light fixtures, according to claim 1, **characterized in that** the flat plate (20), after fixing the conductors (101), receives a resin that prevents water from passing into the product.
